Europäisches Patentamt

European Patent Office

Office européen des brevets

(19)

(11) **EP 0 892 559 A1**

(12) # EUROPEAN PATENT APPLICATION

(43) Date of publication:
**20.01.1999 Bulletin 1999/03**

(51) Int Cl.6: **H04N 7/36**

(21) Application number: **98305737.3**

(22) Date of filing: **17.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **18.07.1997 US 53064 P**

(71) Applicant: **TEXAS INSTRUMENTS INC.**
**Dallas, Texas 75243 (US)**

(72) Inventor: **Moccagatta, Iole**
**Thousands Oaks, California 91360 (US)**

(74) Representative: **Potter, Julian Mark et al**
**D. Young & Co.,**
**21 New Fetter Lane**
**London EC4A 1DA (GB)**

(54) **Padding of object border blocks for motion estimation and transform coding in an object-oriented video coder**

(57) A method of padding for interlaced video by separating the parity fields prior to padding. This avoid mixing parities during padding.

FIG. 1a
FRAME PADDING

ODD FIELD FIG. 1b
FIELD PADDING

EVEN FIELD FIG. 1c
FIELD PADDING

PIXEL BELONGING TO AN EVEN FIELD
PIXEL BELONGING TO AN ODD FIELD
EXTENDED PADDING
REPETITIVE PADDING

1 PIXEL PADDED USING ODD FIELD'S PIXELS
2 PIXEL PADDED USING EVEN FIELD'S PIXELS
12 PIXEL PADDED USING THE AVERAGE OF EVEN AND ODD FIELD'S PIXELS

EP 0 892 559 A1

## Description

The invention relates to electronic image methods and devices, and, more particularly but not exclusively, to digital communication and storage systems with compressed images.

Video communication (television, teleconferencing, Internet, and so forth) typically transmits a stream of video frames (pictures, images) along with audio over a transmission channel for real time viewing and listening or storage. However, transmission channels frequently add corrupting noise and have limited bandwidth. Consequently, digital video transmission with compression enjoys widespread use. In particular, various standards for compression of digital video have emerged and include H.261, MPEG-1, and MPEG-2, with more to follow, including in development H.263 and MPEG-4. There are similar audio compression methods.

Tekalp, Digital Video Processing (Prentice Hall 1995), Clarke, Digital Compression of Still Images and Video (Academic Press 1995), and Schafer et al, Digital Video Coding Standards and Their Role in Video Communications, 83 Proc. IEEE 907 (1995), include summaries of various compression methods, including descriptions of the H.261, MPEG-1, and MPEG-2 standards plus the H.263 recommendations and indications of the desired functionalities of MPEG-4.

H.261 compression uses interframe prediction to reduce temporal redundancy and discrete cosine transform (DCT) on a block level together with high spatial frequency cutoff to reduce spatial redundancy. H.261 is recommended for use with transmission rates in multiples of 64 Kbps (kilobits per second) to 2 Mbps (megabits per second).

The H.263 recommendation is analogous to H.261 but for bitrates of about 22 Kbps (twisted pair telephone wire compatible) and with motion estimation at half-pixel accuracy (which eliminates the need for loop filtering available in H.261) and overlapped motion compensation to obtain a denser motion field (set of motion vectors) at the expense of more computation and adaptive switching between motion compensation with 16 by 16 macroblock and 8 by 8 blocks.

MPEG-1 and MPEG-2 also use temporal prediction followed by two dimensional DCT transformation on a block level as H.261, but they make further use of various combinations of motion-compensated prediction, interpolation, and intraframe coding. MPEG-1 aims at video CDs and works well at rates about 1-1.5 Mbps for frames of about 360 pixels by 240 lines and 24-30 frames per second. MPEG-1 defines I, P. and B frames with I frames intraframe, P frames coded using motion-compensation prediction from previous I or P frames, and B frames using motion-compensated bi-directional prediction/interpolation from adjacent I and P frames.

MPEG-2 aims at digital television (720 pixels by 480 lines) and uses bitrates up to about 10 Mbps with MPEG-1 type motion compensation with I, P. and B frames plus added scalability (a lower bitrate may be extracted to transmit a lower resolution image).

However, the foregoing MPEG compression methods result in a number of unacceptable artifacts such as blockiness and unnatural object motion when operated at very-low-bit-rates. Because these techniques use only the statistical dependencies in the signal at a block level and do not consider the semantic content of the video stream, artifacts are introduced at the block boundaries under very-low-bit-rates (high quantization factors). Usually these block boundaries do not correspond to physical boundaries of the moving objects and hence visually annoying artifacts result. Unnatural motion arises when the limited bandwidth forces the frame rate to fall below that required for smooth motion.

MPEG-4 is to apply to transmission bitrates of 10 Kbps to 1 Mbps and is to use a content-based coding approach with functionalities such as scalability, content-based manipulations, robustness in error prone environments, multimedia data access tools, improved coding efficiency, ability to encode both graphics and video, and improved random access. A video coding scheme is considered content scalable if the number and/or quality of simultaneous objects coded can be varied. Object scalability refers to controlling the number of simultaneous objects coded and quality scalability refers to controlling the spatial and/or temporal resolutions of the coded objects. Scalability is an important feature for video coding methods operating across transmission channels of limited bandwidth and also channels where the bandwidth is dynamic. For example, a content-scalable video coder has the ability to optimize the performance in the face of limited bandwidth by encoding and transmitting only the important objects in the scene at a high quality. It can then choose to either drop the remaining objects or code them at a much lower quality. When the bandwidth of the channel increases, the coder can then transmit additional bits to improve the quality of the poorly coded objects or restore the missing objects.

By independently coding arbitrary shaped objects, MPEG-4 allows manipulation of such objects at the bit stream level in the compressed domain. This functionality will be particularly valuable in video post-production applications by enabling editing and cmpositing at a subframe or object level - an ability that was not previously possible with the existing coding standards. These capabilities will also prove to be a great asset in multimedia authoring tools.

The approach chosen by MPEG-4 to code arbitrary shaped objects is a modification of the classical block-based coding scheme adopted by MPEG-1 and 2.

In MPEG-1 and 2 the motion of the scene is estimated by performing block matching, and texture information (intraframe or prediction error) is coded by block-based DCT coding.

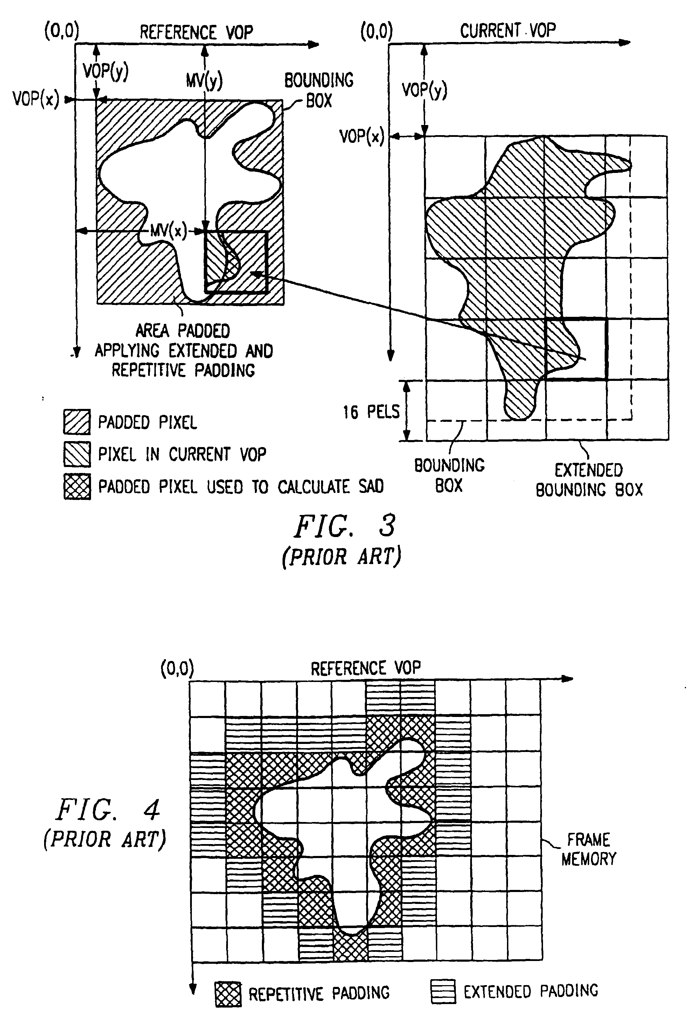

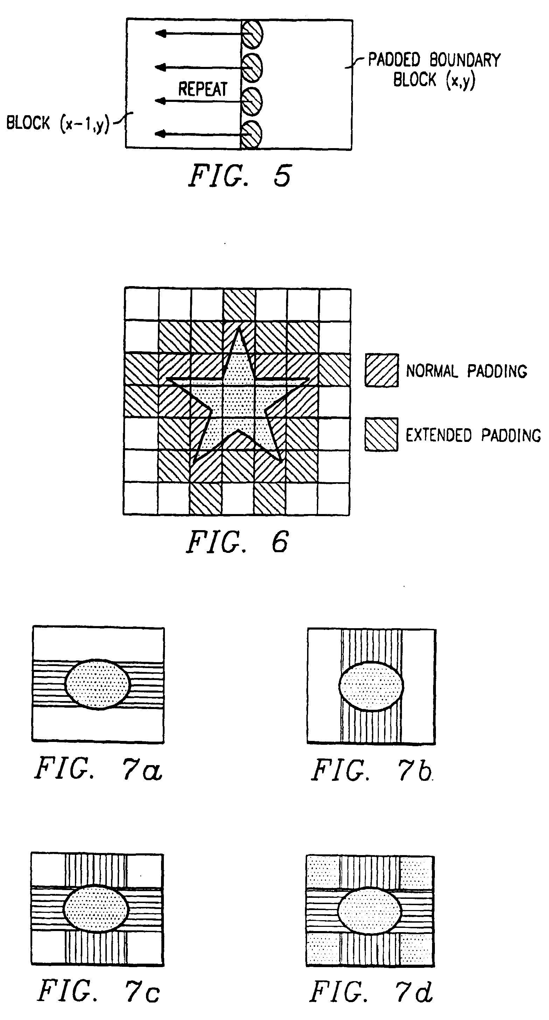

In MPEG-4 the motion estimation technique is a modification of the block matching algorithm. In this algorith, the scene is partitioned into blocks of fixed location and size. For those blocks which lie completely within the object, motion estimation is preformed using the block matching technique. In order to perform effective motion estimation of the blocks lying on the border of the object, the block matching technique is modified to a polygon matching approach; see Figures 3-4 and section 3.3.3.1 of the MPEG-4 Verification Model of April 1997. In this approach, in computing the best matching block for border blocks only the pixels that lie within the current object shape are used. Also, the previous reference object is padded by using the Repetitive and Extended padding techniques to provide a more effective search area; see Figures 5-7 and section 3.3.1 and 3.3.2 of the Verification Model.

The macroblocks coded as Intra frames and those motion compensated are then coded using the block DCT. For those blocks which lie on the border of the object padding is performed before DCT coding. A different padding scheme is applied to Intra and prediction errors. In both cases, the padding is performed on a macroblock base. The same Repetitive and Extended padding used for motion estimation and compensation is applied for Intra coding, while the motion compensated macroblocks are filled in with zeroes.

Recently there has been an effort in MPEG-4 to extend the new MPEG-4 functionalities from progressive to interlaced video data. This has the following advantages: First, most of the video data is recorded, manipulated, , and broadcast in interlaced format. Second, being able to deal with interlaced format in the coding loop avoids costly and suboptimal interlaced to progressive to interlaced conversions. Finally, the majority of the special effects (such as chroma keying, alpha blending, rotation, translation, and so forth) today are done on the interlaced video. Thus, MPEG-4 is expected to operate in a similar manner.

The coding tools currently adopted in MPEG-4 to improve efficiency when coding video data in interlaced format are (I) field/frame DCT and (ii) field/frame motion estimation and compensation on a macroblock basis for rectangular shaped objects. Their efficiency consists in exploiting the higher correlation existing within fields of the interlaced data.

However, more efficient coding for interlaced format is a problem.

Hardware and software implementations of the JPEG, H.261, MPEG-1, and MPEG-2 compression and decoding exist. Further, programmable microprocessors or digital signal processors, such as the Ultrasparc or TMS320C6x, running appropriate software can handle most compression and decoding for proposed MPEG-4, and less powerful processors may handle lower bitrate compression and decompression.

An illustrative embodiment of the present invention seeks to provide a method for video compression and decoding that avoids or minimizes above-mentioned problems. Aspects of the invention are specified in the claims.

An embodiment of the present invention provides video coding and decoding with interlaced format for arbitrary shaped objects by separate padding within the interlace fields.

This embodiment has the advantage of maintaining the field correlations.

A further embodiment of the present invention also provides video systems with applications for this coding, such as video telephony and fixed camera surveillance for security, including time-lapse surveillance, with digital storage in random access memories.

For a better understanding of the present invention, reference will now be made to the following description of embodiments of the invention by way of example, and to the accompanying schematic drawings, in which:

Figures 1a-2c illustrate the preferred embodiment field padding;
Figures 3-4 show motion estimation padding;
Figures 5-7 show repetitive padding; and
Figure 8 is a block diagram ofa decoder using macro-block based padding.

To understand the preferred embodiments, first consider the current MPEG-4. For MPEG-4 a video object (VO) corresponds to entities in the bitstream that the user can access and manipulate (cut, paste, ... .). Instaces of a video object at a given time is called a video object plane (VOP). The encoder sends together with the VOPs, composition information (using composition layer syntax) to indicate where and when each VOP is to be displayed. At the decoder side the user may be allowed to change the composition of the scene displayed by interacting on the composition information.

In order to perform motion prediction on a per VOP basis, the motion estimation of the blocks on the VOP borders has to be modified from block matching to polygon matching. Furthermore, a special padding technique, i.e., the macroblock-based repetitive padding, is required for the reference VOP. The details of these techniques are described in the following paragraphs.

Since the VOPs have arbitrary shapes rather rectangular shapes, and the shapes change from time to time, some conventions is necessary to ensure the consistency of the motion compensation in the Verification Model.

The absolute (frame) coordinate system is used for referencing all of the VOPs. At each particular time instance, a bounding rectangle that includes the shape of that VOP, as shown in Figure 3 is defined. The left and top corner, in their absolute coordinates, of the bounding box is encoded in the VOP spatial reference.

Thus, the motion vector for a particular feature inside a VOP, e.g. a macroblock, refers to the displacement of the feature in absolute coordinates. No alignment of VOP bounding boxes at different time instances is performed.

In addition to the motion estimation and compensation mode, two additional modes are supported, namely, unrestricted and advanced modes are supported. In all three modes, the motion vector search range is up to $[-2^{f\_code+3}, 2^{f\_code+3} - 0.5]$ where $0 <= f\_code <= 7$. This mode differs from the unrestricted motion mainly by restricting the motion vectors inside the bounding box of the VOP. The advanced mode allows multiple motion vectors in one macroblock and overlapped motion compensation. Note that in all three modes, macroblock-based padding of the VOP is needed for both motion estimation and compensation.

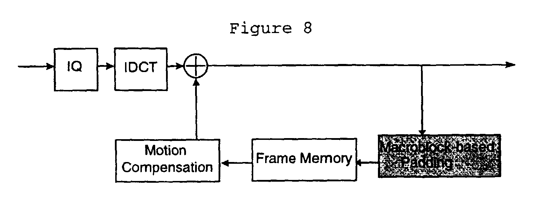

This section describes the macroblock-based padding of the VOP process. This process allows the decoder to pad a macroblock as soon as it is reconstructed reconstructed, as depicted in Figure 8, block diagram of a decoder using macroblock-based padding.

The padded VOP is then used for motion compensation. At the encoder, a reference VOP is padded in a similar manner for motion estimation prior to motion compensation.

The padding process is as follows. The frame memory (see Figure 8) is first initialized with "128" for the luminance and chrominance components. The boundary blocks are padded using repetitive padding described in the next section. Luminance component is padded per 16x16 block while the chorminance components are padded per 8x8 block. For padding of chroma blocks, a 16x16 alpha block is decimated. To cope with VOP of big motions, the padding is further extended to blocks which are completely outside the VOP but immediately next to boundary blocks. These blocks are padded by replicating the samples of (padded) adjacent boundary blocks as shown in Figure 5.

If a block is next to two or more boundary blocks, the block is padded by replicating the samples at the border of one of the boundary blocks determined according to the following convention. Let the boundary block at the bottom of a target block be numbered 0, the one on top 1, the one on its right 2 and the one on its left 3. The target block is then padded by replicating the samples at the border of the boundary block with the largest number.

An image padding technique, i.e., repetitive padding, is applied to the reference VOP prior to motion estimation/compensation. In principle, the padding technique fills the areas outside the VOP by repeating the boundary pixels of the VOP. Note that the padding should be performed with respect to the reconstructed binary shape. Each boundary pixel is repeated towards the exterior of the VOP. If an pixel outside of the VOP can be covered by the repetition of more than one boundary pixel, the average of the repeated values is taken. The following steps give a precise definition of the process.

(1) Scan each horizontal line of a block. A block could be 16x16 (luminance) or 8x8 (chrominace). Each scan line possibly consists of two kinds of continuos line segments: exterior segments, in which all pixels lie outside the VOP and interior segments, in which, all pixels lie inside the VOP.

    (A) If there are no exterior segments, the scan line is not padded.
    (B) Elsewise, there are two situations for a particular exterior segment:

- it is positioned between an interior segment and the end of the scan line. Fill the exterior segment with the end pixel of the interior segment.
- it is between two different interior segments. Fill the exterior segment with the averaged value of the two end points of the interior segments adjacent to this exterior segment.

(2) Apply (1) to each vertical scan line.
(3) If a zero pixel can be padded by both (1) and (2), the average of the two possible values is taken.
(4) Consider the exterior pixels that are not padded in the above steps. For each one of them,

- scan horizontally to find the closest padded (but exterior) pixel on the same horizontal scan (if there is a tie, the one to the left of the current pixel is selected);
- and scan vertically to find the closest padded (but exterior) pixels on the same vertical scan (if there is a tie, the one on the top of the current pixel is selected);
- replace the non-padded exterior pixel by the average of the pixels found above.

Figures 7a-7d illustrates each of the steps described above.

The intra VOPs and the residual data after motion compensation is coded using the same 8x8 block DCT scheme. DCT is done separately for each of the luminance and chrominance planes. When shape of the VOP is arbitrary, the macroblocks that belong to the arbitrary shape of the VOP are treated as described below. There are two types of macroblocks that belong to an arbitrarily shaped VOP: (1) those that lie completely inside the VOP shape and (2) those that lie on the boundary of the shape. The macroblocks that lie completely inside the VOP are coded using a technique identical to the technique used in H263. The intra 8x8 blocks that belong to the macroblocks lying on the border of the VOP shape are first padded as described above. For padding of chroma blocks, a 16x16 alpha block is decimated. For residue blocks, the region outside the VOP within the blocks are padded with zero. Padding is performed separately for each of the luminance and chrominance 8*8 blocks by using the original alpha values of the luminance or chrominance in this 8*8 block. Transparent blocks are skipped and therefore not coded. These blocks are then coded in a manner identical to the interior blocks. The macroblocks that do not belong to the arbitrary shape but inside the bounding box of a VOP are not coded at all.

A Low Pass Extrapolation (LPE) Padding Technique will now be described. The following block padding technique is applied to Intra blocks that are not located completely within the object boundary before performing the DCT. LPE padding is performed in two steps.

(1) Assign the mean value of the block pixels within the object boundary to each pixel outside the object boundary.
(2) Apply the following average operation to each pixel f(i,j) outside the object boundary, starting from the top left corner of the block and proceeding row by row to the bottom right pixel.

$$f(i,j)=1/4[f(i,j-1)+f(i-1,j)+f(i,j+1)+f(i+1,j)]$$

If one or more of the four pixels used for filtering are outside of the block, the corresponding pixels are not considered for the average operation and the factor 1/4 is modified accordingly.

After this padding operation the resulting block is ready for DCT coding.

An Adaptive Frame/Field DCT will now be described. When interlaced video is coded, superior energy compaction can sometimes be obtained by reordering the lines of the macroblock to form 8x8 luminance blocks consisting of data from one field. Field DCT line order is used when

$$\sum_{i=0}^{6}\sum_{j=0}^{15}(p_{2i,j}-p_{2i+1,j})^2+(p_{2i+1,j}-p_{2i+2,j})^2 > \sum_{i=0}^{6}\sum_{j=0}^{15}(p_{2i,j}-p_{2i+2,j})^2+(p_{2i+1,j}-p_{2i+3,j})^2$$

where $p_{i,j}$ is the spatial luminance data (samples or differences) just before the 8x8 DCT is performed. The field DCT permuation is indicated by the dct_type bit having a value of 1.

When field DCT mode is used, the luminance lines (or luminance error) in the spatial domain of the macroblock are permuted from the frame DCT orientation to field DCT configuration as show below. The black regions of the diagram denote the bottom field. The resulting macroblocks are transformed, quantized and VLC encoded normally. On decoding a field DCT macroblock, the inverse permutation is performed after all luminance blocks have been obtained from the inverse DCT (IDCT). In the 4:2:0 format, chrominance data are not effected by this mode.

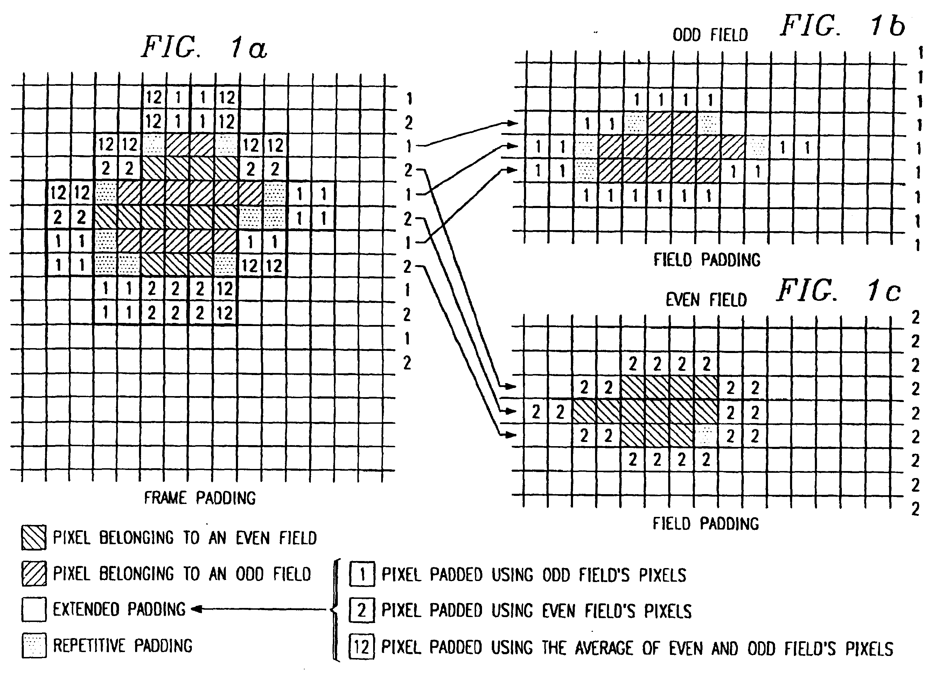

An Interlace field separate padding preferred embodiment will now be described. The preferred embodiment field padding for interlace format (which can be used for the interlace tools such as field/frame DCT and field/frame motion estimation and compensation) performs the padding at a macroblock level on a field basis rather than on a frame basis. This preferred embodiment field padding uses the same rules for padding as described in the foregoing, but the pixels used to pad even or odd lines consist of an average of pixels belonging to only the same parity line. Figures 1a-1c illustrate field padding for the simplified case of macroblocks being only 2 by 2 pixels. In particular, Figure 1a illustrates the frame basis with the VOP pixels cross hatched with the odd parity lines for interlacing denoted by 1s on the righthand ends of the lines, and Figures 1b and 1c show the odd and even interlace fields, respectively. In figure 1a the repetitive padded pixels to fill out the 2 by 2 macroblocks on a frame basis are shown in black, whereas the preferred embodiment field repetitive padded pixels to fill out the corresponding 2 by 1 (macro)blocks in the odd and even fields are shown in black in figures 1b and 1c, respectively. Because the preferred embodiment field basis repetitive padding is done on the fields, fewer total pixels are repetitively padded. Similarly, the extended padding of 2 by 2 macroblocks in figure 1a on a frame basis is shown in terms of the pixel parity of the pixels which determined the extended padded pixels. That is, a 1 in an extended padded pixel indicates that only odd parity pixels determined the extended padded pixel value, and similarly, a 2 in an extended padded pixel indicates that only even parity pixels determined the value of the extended padded pixel. Further, a 12 in an extended padded pixel indicates that both odd and even parity pixel values were used to determine the extended padded pixel value. Of course, extended padding of 2 by 1 (macro)blocks in the field basis uses only pixels of the same parity as the field; figures 1b and 1c show this.

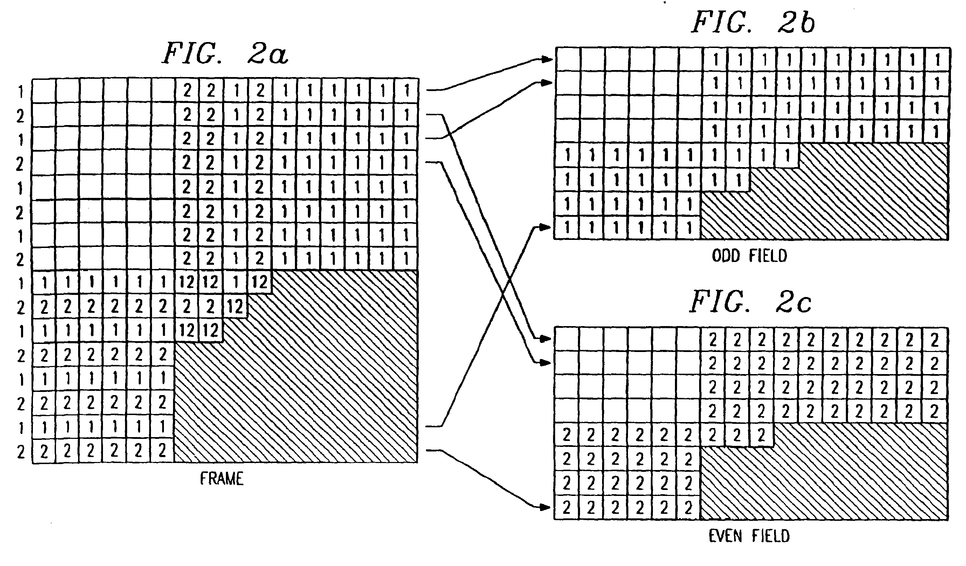

For the usual 16 by 16 macroblock the preferred embodiment proceeds as follows: First, separate the odd and even parity lines into two 16 by 8 blocks. Each 16 by 8 block contains only lines belonging to a single parity. Then, perform padding on each 16 by 8 block independently. Interlace tools are performed using the 16 by 8 field padded blocks. Doing so assures that the padded pixels do not reduce the correlation within a parity, which then can be optimally exploited by the interlace tools. In particular, Figure 2a shows the object pixels as cross hatched in the lower righthand portion and the repetitive padding first steps of horizontal and vertical replication again with a 1 indicating an odd parity value, 2 an even parity value, and 12 odd-even average value for the padded pixels. The open upper lefthand portion will be filled with 12 averages due to the bounding horizontal repetitions being 1s and the bounding vertical repetitions being 2s. Thus if this frame basis padding were then used to generate the separate odd and even parity fields, this padding will have mixed the parities in each field. In contrast, Figure 2b-c show the corresponding odd and even parity field 16 by 8 blocks which the preferred embodiment uses to pad plus the horizontal and vertical repetitions. Of course, the odd parity field padding only uses odd parity boundary pixel values, as Figure 2b indicates by the 1s, and similarly the even parity field padding only uses even parity boundary pixel values as indicated by the 2s in Figure 2c. After the horizontal and vertical repetitions as shown in Figures 2b-c , the repetitive padding is completed by filling in the blank pixels with the averages of the closest horizontal and vertical pixels.

Preferred extended padding again uses the 16 by 8 blocks in the fields to make the extensions, and this preserves the correlations within the fields. In contrast, extended padding using the frame basis as in Figure 2 will mix the parities simply because the macroblock border pixels are mixed in the upper lefthand portion of the macroblock.

The preferred embodiments may be varied in many ways while retaining one or more of their features of direct padding on the fields of interlace format video. For example, the macroblock size could be varied, the

In view of the foregoing description it will be evident to a person skilled in the art that various modifications may be made within the scope of the invention.

The scope of the present disclosure includes any novel feature or combination of features disclosed therein either explicitly or implicitly or any generalisation thereof irrespective or whether or not it relates to the claimed invention or mitigates any or all of the problems addressed by the present invention. The applicant hereby gives notice that new claims may be formulated to such features during the prosecution of this application or of any such further application derived therefrom.

## Claims

1. A method of encoding an image, comprising the steps of:

    (a) decomposing an image into parity fields; and
    (b) padding each parity field separately.

FIG. 1a

FIG. 1b

ODD FIELD

FIG. 1c

EVEN FIELD

FRAME PADDING

FIELD PADDING

FIELD PADDING

PIXEL BELONGING TO AN EVEN FIELD

PIXEL BELONGING TO AN ODD FIELD

EXTENDED PADDING ◄——

REPETITIVE PADDING

1 PIXEL PADDED USING ODD FIELD'S PIXELS

2 PIXEL PADDED USING EVEN FIELD'S PIXELS

12 PIXEL PADDED USING THE AVERAGE OF EVEN AND ODD FIELD'S PIXELS

EP 0 892 559 A1

FIG. 2b

FIG. 2a

ODD FIELD

FRAME

FIG. 2c

EVEN FIELD

EP 0 892 559 A1

**FIG. 3**
**(PRIOR ART)**

**FIG. 4**
**(PRIOR ART)**

FIG. 5

NORMAL PADDING

EXTENDED PADDING

FIG. 6

FIG. 7a

FIG. 7b

FIG. 7c

FIG. 7d

Figure 8

**European Patent Office**

# EUROPEAN SEARCH REPORT

Application Number

EP 98 30 5737

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | EP 0 863 675 A (GEN INSTRUMENT CORP) 9 September 1998 * abstract * * column 13, line 28 - line 31 * * figure 12 * | 1 | H04N7/36 |
| A | SIKORA T: "THE MPEG-4 VIDEO STANDARD VERIFICATION MODEL" IEEE TRANSACTIONS ON CIRCUITS AND SYSTEMS FOR VIDEO TECHNOLOGY, vol. 7, no. 1, February 1997, pages 19-31, XP000678877 * page 27, left-hand column * * figure 11 * | 1 | |
| A | WO 97 13372 A (MICROSOFT CORP) 10 April 1997 * page 35, line 14 - page 38, line 19 * * figures 17,18 * | 1 | |
| P,A | DE 196 48 963 C (SIEMENS AG) 30 April 1998 * abstract; figure 3 * | 1 | TECHNICAL FIELDS SEARCHED (Int.Cl.6) H04N |
| P,X | ISO/IEC JTC1/SC29/WG11 : "N2202 - Information Technology - Coding of audio-visual objects: Visual ISO/IEC 14496-2 Committee Draft" 28 May 1998 XP002079325 * page 164, paragraph 7.5.1.5 * | 1 | |

The present search report has been drawn up for all claims

| Place of search | Date of completion of the search | Examiner |
|---|---|---|
| THE HAGUE | 1 October 1998 | Berbain, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)